# EUROPEAN PATENT APPLICATION

(11) **EP 3 184 747 A1**
(43) Date of publication of application: **28.06.2017**
(21) Application number: 16203123.1
(22) Date of filing: 09.12.2016
(51) Int. Cl.: F01D 9/02, F02C 3/16, F01D 5/14, F23R 3/20

(54) **FUEL INJECTORS AND STAGED FUEL INJECTION SYSTEMS IN GAS TURBINES**

(30) Priority: 22.12.2015 US 201514977979
(71) Applicant: General Electric Company, Schenectady, NY 12345 (US)
(72) Inventor: LACY, Benjamin Paul, Greenville, SC South Carolina 29615 (US)
(74) Representative: Lee, Brenda

(57) **Abstract**

A gas turbine 12 that includes a row of circumferentially spaced stator blades 17 in a turbine. Each of the stator blades may include an airfoil 120 defined between a concave pressure side face 126 and a laterally opposed convex suction side face 127. At least one of the stator blades within the row may include a fuel injector 51 that includes: a transverse nozzle 119 extending through the airfoil between an inlet formed through the pressure side face and an outlet formed through the suction side face of the airfoil; and a fuel channel formed through the airfoil of the stator blade, the fuel channel having an upstream end, at which an inlet port fluidly connects the fuel channel to a fuel supply, and a downstream end, at which an outlet port fluidly connects the fuel channel to the transverse nozzle.

## Description

### BACKGROUND OF THE INVENTION

This present application relates generally to combustion systems within combustion or gas turbine engines. More specifically, but not by way of limitation, the present application describes novel systems, apparatus, and/or methods related to the downstream or axially staged injection of air and fuel in such combustion systems, as well as the cooling systems and components related therewith.

As will be appreciated, the efficiency of combustion or gas turbine engines ("gas turbines") has improved significantly over the past several decades as advanced technologies have enabled increases in engine size and higher operating temperatures. The technical advances that have allowed such achievements include new heat transfer technologies for cooling hot gas path components as well as new more durable materials. During this time frame, however, regulatory standards have been enacted that limit the emission levels of certain pollutants. Specifically, the emission levels of NOx, CO and UHC-all of which are sensitive to the operating temperature and combustion characteristics of the engine-have become more strictly regulated. Of these, the emission level of NOx is especially sensitive to increases at higher engine firing temperatures and, thus, this pollutant has become a significant limit as to how much further firing temperatures might be increased. Because higher operating temperatures generally yield more efficient engines, this hindered further advances in efficiency. Thus, performance limitations associated with conventional combustion systems became factor limiting the development of more efficient gas turbines.

One way in which the combustion system exit temperatures have been increased, while still also maintaining acceptable emission levels and cooling requirements, is through the axially staging the fuel and air injection. This typically requires increasing air volume passing through the combustor as well as directing more of that volume to injectors axially spaced downstream relative to the primary injector positioned at the forward end of the combustor. As will be understood, this increased volume of airflow results in more significance being placed on the aerodynamic performance of the unit. More specifically, combustors that minimize the pressure drop of the compressed air moving through it may achieve performance benefits and efficiencies that, as flow levels through the combustors increase, become of greater significance. A significant portion of compressor air is consumed in cooling hot gas path components, such as turbine rotor and stator blades, particularly those in the initial stages of the turbine.

As a result, one of the primary goals of advanced combustion system design relates to developing staged combustion configurations that enable higher firing temperatures and/or more efficient performance, while minimizing combustion driven emissions, aerodynamic pressure losses, and efficient usage of cooling air. As will be appreciated, such technological advances would result in improved engine efficiency levels.

### BRIEF DESCRIPTION OF THE INVENTION

The present application thus describes a gas turbine that includes a row of circumferentially spaced stator blades in a turbine. Each of the stator blades may include an airfoil defined between a concave pressure side face and a laterally opposed convex suction side face. At least one of the stator blades within the row may include a fuel injector that includes: a transverse nozzle extending through the airfoil between an inlet formed through the pressure side face and an outlet formed through the suction side face of the airfoil; and a fuel channel formed through the airfoil of the stator blade, the fuel channel having an upstream end, at which an inlet port fluidly connects the fuel channel to a fuel supply, and a downstream end, at which an outlet port fluidly connects the fuel channel to the transverse nozzle.

The present invention may further include a stator blade for a turbine of a gas turbine. The stator blade may be configured for use within a row of circumferentially spaced stator blades. The stator blade may further include: an airfoil defined between a concave pressure side face and a laterally opposed convex suction side face, wherein the pressure side face and the suction side face extend axially between opposite leading and trailing edges and radially between inboard and outboard sidewalls; and a fuel injector. The fuel injector may include: a transverse nozzle extending through the airfoil between an inlet formed through the pressure side face and an outlet formed through the suction side face of the airfoil; and a fuel channel formed through the airfoil of the stator blade, the fuel channel having an upstream end, at which an inlet port fluidly connects the fuel channel to a fuel supply, and a downstream end, at which an outlet port fluidly connects the fuel channel to the transverse nozzle.

The present invention may further describe a gas turbine that includes: a combustor coupled to a turbine that together define a working fluid flowpath, the working fluid flowpath extending aftward along a longitudinal axis from a forward end defined by a forward injector in the combustor, through an interface at which the combustor ends and the turbine begins, and then through the turbine to an aftward end; a compressor discharge cavity formed about the working fluid flowpath for receiving a combustor air supply delivered thereto by a compressor; circumferentially spaced stator blades positioned so to form a row of stator blades in the turbine, each of the stator blades comprising an airfoil extending across the working fluid flowpath, the airfoil defined between a concave pressure side face and a laterally opposed convex suction side face, wherein the pressure side face and the suction side face extend axially between opposite leading and trailing edges and radially between inboard and outboard sidewalls; and a staged injection system. The staged injection system may include the forward injector and a staged injector. The staged injector may include a fuel injector integrated into at least half of the stator blades of the row of stator blades. The fuel injector may include: a transverse nozzle extending through the airfoil between an inlet formed through the pressure side face and an outlet formed through the suction side face of the airfoil; and a fuel channel formed through the airfoil of the stator blade, the fuel channel having an upstream end, at which an inlet port fluidly connects the fuel channel to a fuel supply, and a downstream end, at which an outlet port fluidly connects the fuel channel to the transverse nozzle.

These and other features of the present application will become apparent upon review of the following detailed description of the preferred embodiments when taken in conjunction with the drawings and the appended claims.

### BRIEF DESCRIPTION OF THE DRAWINGS

These and other features of this invention will be more completely understood and appreciated by careful study of the following more detailed description of exemplary embodiments of the invention taken in conjunction with the accompanying drawings, in which:
Figure 1 is a sectional schematic representation of an exemplary gas turbine of a type in which embodiments of the present invention may be used;
Figure 2 is a sectional view of the compressor section of the gas turbine of Figure 1;
Figure 3 is a sectional view of the turbine section of the gas turbine of Figure 1;
Figure 4 is a sectional schematic illustration of a conventional combustor and surrounding systems of a type in which embodiments of the present invention may be used;
Figure 5 is a sectional schematic representation of a conventional combustor having a staged injection system;
Figure 6 is a sectional schematic representation of a conventional staged combustion system that illustrates the working fluid flowpath of a gas turbine as it continues into the turbine section of the engine;
Figure 7 is a simplified sectional representation of a stator blade having a fuel injector according to an embodiment of the present invention;
Figure 8 is a sectional view along 8-8 of Figure 7;
Figure 9 is a simplified sectional representation of a stator blade having a fuel injector according to an embodiment of the present invention;
Figure 10 is a sectional view along 10-10 of Figure 9;
Figure 11 is a cross-sectional view of a stator blade airfoil that includes a transverse nozzle according to an embodiment of the present invention;
Figure 12 is a cross-sectional view of a stator blade airfoil that includes a transverse nozzle according to an alternative embodiment of the present invention;
Figure 13 is a cross-sectional view of a stator blade airfoil that includes a transverse nozzle according to an alternative embodiment of the present invention;
Figure 14 is a cross-sectional view of a stator blade airfoil that includes a transverse nozzle according to an alternative embodiment of the present invention; and
Figure 15 is a cross-sectional view of a stator blade airfoil that includes a transverse nozzle according to an alternative embodiment of the present invention.

### DETAILED DESCRIPTION OF THE INVENTION

Aspects and advantages of the invention are set forth below in the following description, or may be obvious from the description, or may be learned through practice of the invention. Reference will now be made in detail to present embodiments of the invention, one or more examples of which are illustrated in the accompanying drawings. The detailed description uses numerical designations to refer to features in the drawings. Like or similar designations in the drawings and description may be used to refer to like or similar parts of embodiments of the invention. As will be appreciated, each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents. It is to be understood that the ranges and limits mentioned herein include all sub-ranges located within the prescribed limits, inclusive of the limits themselves, unless otherwise stated. Additionally, certain terms have been selected to describe the present invention and its component subsystems and parts. To the extent possible, these terms have been chosen based on the terminology common to the technology field. Still, it will be appreciate that such terms often are subject to differing interpretations. For example, what may be referred to herein as a single component, may be referenced elsewhere as consisting of multiple components, or, what may be referenced herein as including multiple components, may be referred to elsewhere as being a single component. As such, in understanding the scope of the present invention, attention should not only be paid to the particular terminology used, but also to the accompanying description and context, as well as the configuration, function, and/or usage of the component being referenced and described, including the manner in which the term relates to the several figures, and, of course, the precise usage of the terminology in the appended claims. Further, while the following examples are presented in relation to a certain type of gas turbine or turbine engine, the technology of the present invention also may be applicable to other types of turbine engines as would the understood by a person of ordinary skill in the relevant technological arts.

Several descriptive terms may be used throughout this application so to explain the functioning of turbine engines and/or the several sub-systems or components included therewithin, and it may prove beneficial to define these terms at the onset of this section. Accordingly, these terms and their definitions, unless stated otherwise, are as follows. The terms "forward" and "aft" or "aftward", without further specificity, refer to the direction toward directions relative to the orientation of the gas turbine. Accordingly, "forward" refers to the compressor end of the engine, while "aftward" refers to the direction toward the turbine end of the engine. Each of these terms, thus, may be used to indicate movement or relative position along the longitudinal central axis of the machine or component therein. The terms "downstream" and "upstream" are used to indicate position within a specified conduit relative to the general direction of flow moving through it. As will be appreciated, these terms reference a direction relative to the direction of flow expected through the specified conduit during normal operation, which should be plainly apparent to those skilled in the art. As such, the term "downstream" refers to the direction in which the fluid is flowing through the specified conduit, while "upstream" refers to the opposite of that. Thus, for example, the primary flow of working fluid through a gas turbine, which begins as air moving through the compressor and then becomes combustion gases within the combustor and beyond, may be described as beginning at an upstream location toward an upstream or forward end of the compressor and terminating at an downstream location toward a downstream or aftward end of the turbine.

In regard to describing the direction of flow within a common type of combustor, as discussed in more detail below, it will be appreciated that compressor discharge air typically enters the combustor through impingement ports that are concentrated toward the aftward end of the combustor (relative to the combustors longitudinal central axis of the combustor and the aforementioned compressor/turbine positioning that defines forward/aft distinctions). Once in the combustor, the compressed air is guided by a flow annulus formed about an interior chamber toward the forward end of the combustor, where the airflow enters the interior chamber and, reversing its direction of flow, travels toward the aftward end of the combustor. In yet another context, the flow of coolant through cooling channels or passages may be treated in the same manner.

Additionally, given the configuration of compressor and turbine about a central common axis, as well as the cylindrical configuration about a central axis that is typical to many combustor types, terms describing position relative to such axes may be used herein. In this regard, it will be appreciated that the term "radial" refers to movement or position perpendicular to an axis. Related to this, it may be required to describe relative distance from the central axis. In this case, for example, if a first component resides closer to the central axis than a second component, the first component will be described as being either "radially inward" or "inboard" of the second component. If, on the other hand, the first component resides further from the central axis than the second component, the first component will be described herein as being either "radially outward" or "outboard" of the second component. Additionally, as will be appreciated, the term "axial" refers to movement or position parallel to an axis, and the term "circumferential" refers to movement or position around an axis. As mentioned, while these terms may be applied in relation to the common central axis that extends through the compressor and turbine sections of the engine, these terms also may be used in relation to other components or sub-systems of the engine as may be appropriate. Finally, the term "rotor blade", without further specificity, is a reference to the rotating blades of either the compressor or the turbine, which include both compressor rotor blades and turbine rotor blades. The term "stator blade", without further specificity, is a reference to the stationary blades of either the compressor or the turbine, which include both compressor stator blades and turbine stator blades. The term "blades" will be used herein to refer to either type of blade. Thus, without further specificity, the term "blades" is inclusive to all type of turbine engine blades, including compressor rotor blades, compressor stator blades, turbine rotor blades, and turbine stator blades.

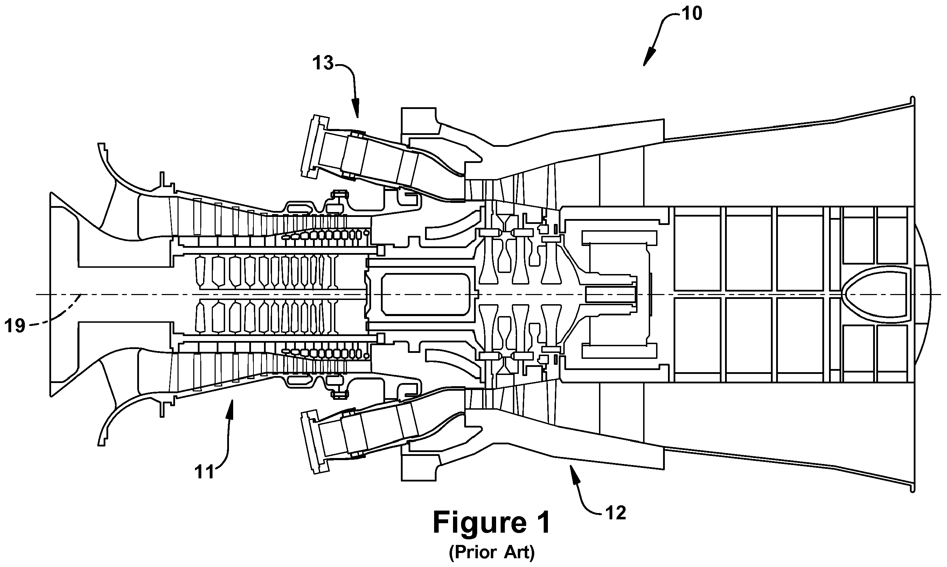

By way of background, referring now to the figures, Figure 1 illustrates an exemplary gas turbine 10 in which embodiments of the present application may be used. It will be understood by those skilled in the art that the present invention may not be limited for use in this particular type of turbine engine, and, unless otherwise stated, the examples provided are not meant to be so limiting. In general, gas turbines operate by extracting energy from a pressurized flow of hot gases produced by the combustion of a fuel in a stream of compressed air. As illustrated in Figure 1, the gas turbine 10 may include an axial compressor 11 that is mechanically coupled via a common shaft or rotor to a downstream turbine section or turbine 12, with a combustor 13 positioned therebetween. As shown, the common shaft of the gas turbine 10 forms a central axis 18 that extends through the compressor 11 and turbine 12.

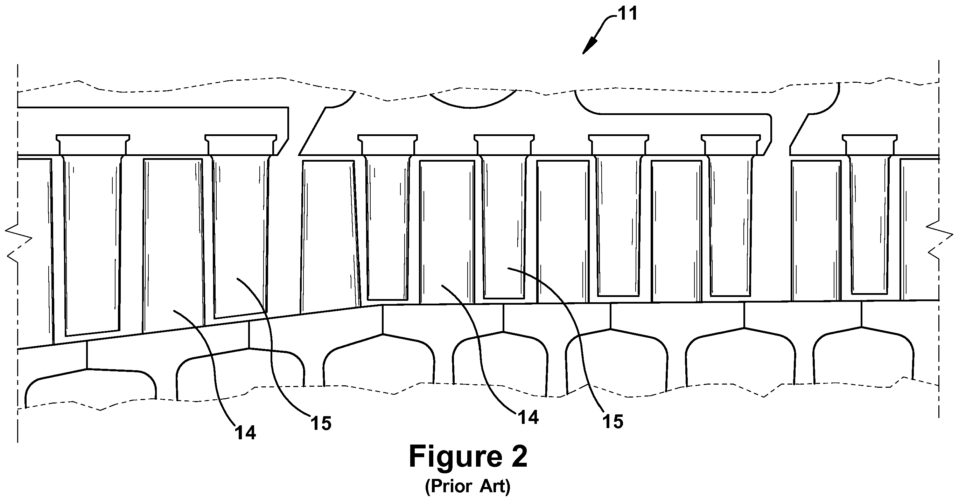

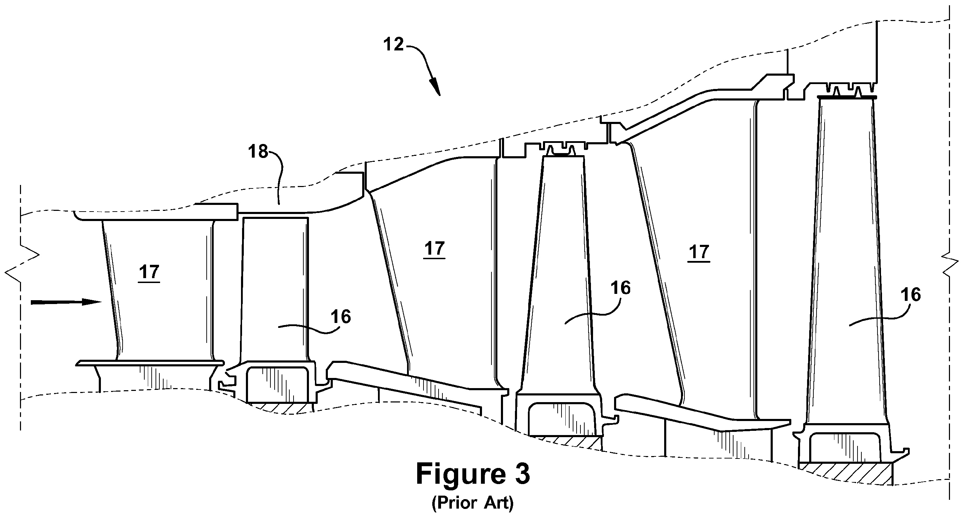

As illustrated in Figure 2, the compressor 11 may include a plurality of stages, each of which may include a row of compressor rotor blades 14 followed by a row of compressor stator blades 15. Thus, a first stage may include a row of compressor rotor blades 14, which rotates about the central axis 18, followed by a row of compressor stator blades 15, which remains stationary during operation. As shown in Figure 3, the turbine 12 also may include a plurality of stages. In the case of the illustrated exemplary turbine 12, a first stage may include a row of nozzles or turbine stator blades 17, which remains stationary during operation, followed by a row of turbine buckets or rotor blades 16, which rotates about the central axis 18 during operation. As will be appreciated, the turbine stator blades 17 within one of the rows generally are circumferentially spaced one from the other and fixed about the axis of rotation. The turbine rotor blades 16 may be mounted on a rotor wheel or disc for rotation about the central axis 18. It will be appreciated that the turbine stator blades 17 and turbine rotor blades 16 lie in the hot gas path of the turbine 12 and interact with the hot gases moving therethrough.

In one example of operation, the rotation of the rotor blades 14 within the axial compressor 11 compresses a flow of air. In the combustor 13, energy is released when the compressed airflow is mixed with a fuel and ignited. The resulting flow of hot combustion gases from the combustor 13, which may be referred to as the working fluid, is then directed over the turbine rotor blades 16, with the flow thereof inducing the rotor blades 16 to rotate about the shaft. In this manner, the energy of the flow of working fluid is transformed into the mechanical energy of the rotating blades and, given the connection between the rotor blades and the shaft via the rotor disc, the rotating shaft. The mechanical energy of the shaft then may be used to drive the rotation of the compressor rotor blades, such that the necessary supply of compressed air is produced, and also, for example, a generator for the production of electricity, as would be the case in a power generating application.

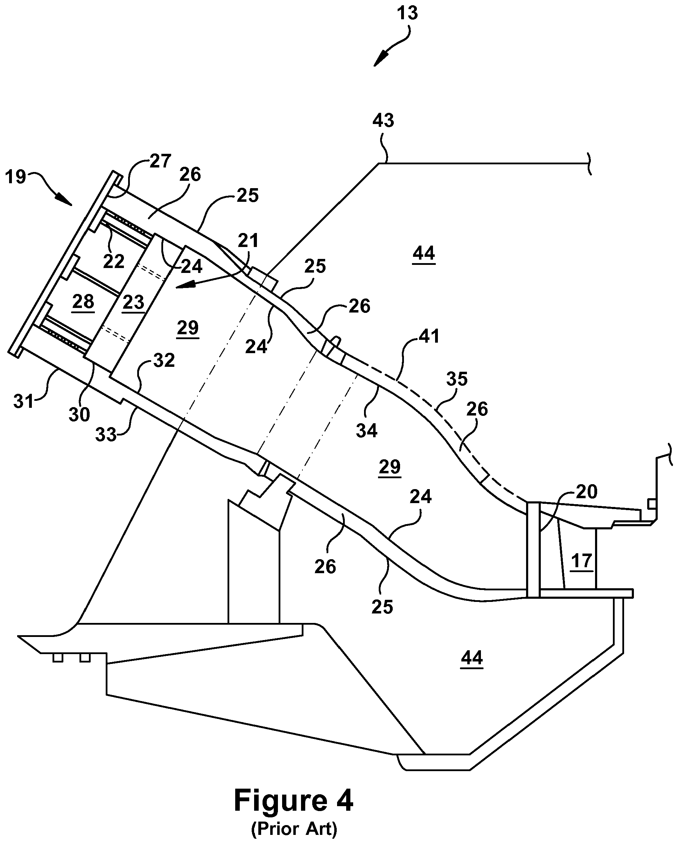

Figure 4 provides a simplified cross-sectional view of a conventional combustor 13 and surrounding structure. As will be appreciated, the combustor 13 may be axially defined between a headend 19, which is positioned at the forward end of the combustor 13, and an aft frame 20, which is positioned at the aftward end of the combustor 13 and functions to connect the combustor 13 to the turbine 12. A forward injector 21 may be positioned toward the forward end of the combustor 13. As used herein, the forward injector 21 refers to the forward-most fuel and air injector in the combustor 13, which typically serves as the primary component for mixing fuel and air for combustion within the combustion zone of the combustor 13. The forward injector 21 may connect to a fuel line 22 and include a nozzle 23. The nozzle 23 of the forward injector 21 may include any type of conventional nozzle, such as, for example, a micro-mixer nozzle, a nozzle having a swirling or swozzle configuration, or other type of nozzle that meets the functionality discussed herein. More specifically, as discussed in more detail below, the nozzle 22 is configured to be compatible with staged injection systems, as described in U.S. Patent 8,019,523, which is hereby incorporated by reference in its entirety. As illustrated, the headend 19 may provide various manifolds, apparatus, and/or fuel lines 22, through which fuel may be delivered to the forward injector 21. The headend 19, as illustrated, also may include an endcover 27 that, as will be appreciated, forms the forward axial boundary of the large interior cavity that is defined within the combustor 13.

As illustrated, the interior cavity defined within the combustor 13 may be subdivided into several lesser spaces or chambers. These chambers may include airflow or air directing structure (such as walls, ports, and the like) that is configured to direct the flow of compressed air and the fuel/air mixture along a desired flow route. The interior cavity of the combustor 13 may include an inner radial wall 24 and, formed about the inner radial wall 24, an outer radial wall 25. As illustrated, the inner radial wall 24 and outer radial wall 25 may be configured such that a flow annulus 26 is defined therebetween. As further illustrated, at the forward end of the region defined within the inner radial wall 24, a forward chamber 28 may be defined, and, aftward of the forward chamber 28, an aftward chamber 29 may be defined. As will be appreciated, the forward chamber 28 is defined by a section of the inner radial wall 24 that is part of a component called a cap assembly 30. As will be appreciated, the aftward chamber 29 may define the region within which the fuel and air mixture brought together within the forward injector 21 is ignited and combusted, and, thus, also may be referred to as a combustion zone.

The cap assembly 30, as shown, may extend aftward from a connection it makes with the endcover 27, and be surrounded generally by an axial section of the outer radial wall 25 that may be referred herein as a combustor casing 31. As will be appreciated, the combustor casing 31 may be formed just outboard of and in spaced relation to the outer surface of the cap assembly 30. In this manner, the cap assembly 30 and the combustor casing 31 may form an axial section of the flow annulus 26 between them. As will be appreciated, the cap assembly 29 may further house and structurally support the nozzle 23 of the forward injector 21, which may be positioned at or near the aftward end of the cap assembly 30. The aftward chamber or combustion zone 29 that occurs just downstream of the forward injector 21 may be circumferentially defined by an axial section of the inner radial wall 24 that, depending on the type of combustor, may be referred to as a liner 32. From the liner 32, the aftward chamber 29 may extend aftward through a downstream section of the inner radial wall 24 that may be referred to as a transition piece 34, which directs the flow of hot combustion gases toward the connection that the combustor 13 makes with the turbine 12.

The outer radial wall 25, as mentioned, may surround the inner radial wall 24 so that the flow annulus 26 is formed between them. According to exemplary configurations, positioned about the liner 32 section of the inner radial wall 24 is a section of the outer radial wall 25 that may be referred to as a liner sleeve 33. Though other configurations are also possible, the liner 32 and liner sleeve 33 may be cylindrical in shape and arranged concentrically. As illustrated, the section of the flow annulus 26 formed between the cap assembly 30 and the combustor casing 31 may connect to the section of the flow annulus 26 defined between the liner 32 and liner sleeve 33 and, in this way, the flow annulus 26 extends aftward (i.e., toward the connection to the turbine 12). In similar fashion, as illustrated, positioned about the transition piece 34 section of the inner radial wall 24 is a section of the outer radial wall 25 that may be referred to as a transition sleeve 35. As shown, the transition sleeve 35 is configured to surround the transition piece 34 such that the flow annulus 26 is extended further aftward. The liner sleeve 33 and/or the transition sleeve 35 may include a plurality of impingement ports 41 that allow compressed air external to the combustor 13 to enter the flow annulus 26. It will be appreciated that, as shown in Figure 4, a compressor discharge casing 43 may define a compressor discharge cavity 44 about the combustor 13. The compressor discharge cavity 44 may be configured to receive a supply of compressed air from the compressor 11 such that the compressed air enters the flow annulus 26 through the impingement ports 41. As will be appreciated, the impingement ports 41 may be configured to impinge the airflow entering the combustor 13 so that fast moving jets of air are produced. These jets of air may be trained against the outer surface of the inner radial wall 24 so to convectively cool it during operation. Once in the flow annulus 26, the compressed air is typically directed toward the forward end of the combustor 13, where, via one or more cap inlets 45 formed in the cap assembly 30, the airflow enters the forward region of the cap assembly 30. The compressed air may then be directed to the nozzle 23 of the forward injector 21 where, as mentioned, it is mixed with fuel for combustion within the combustion zone.

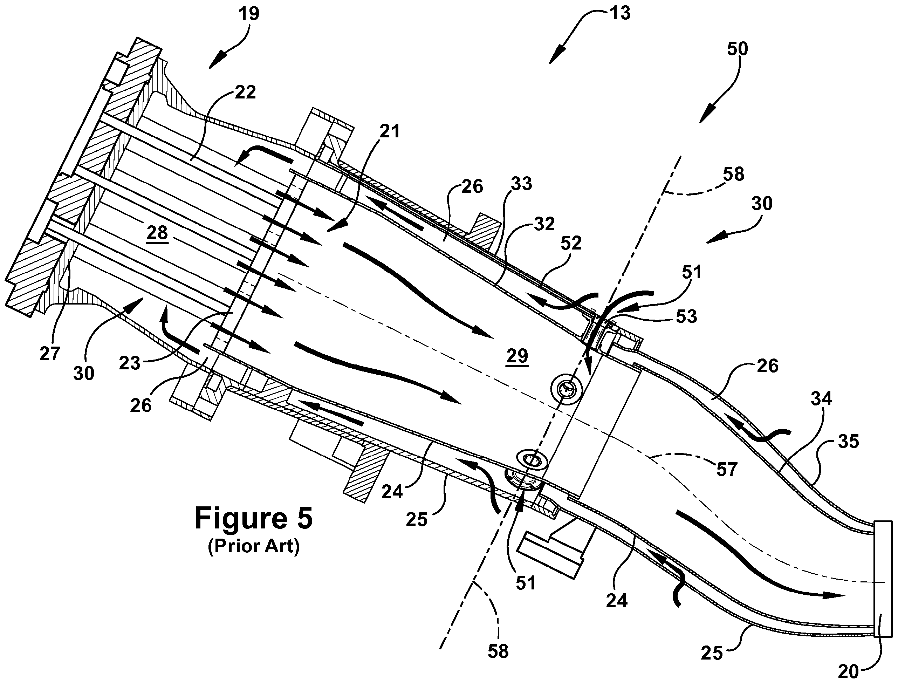

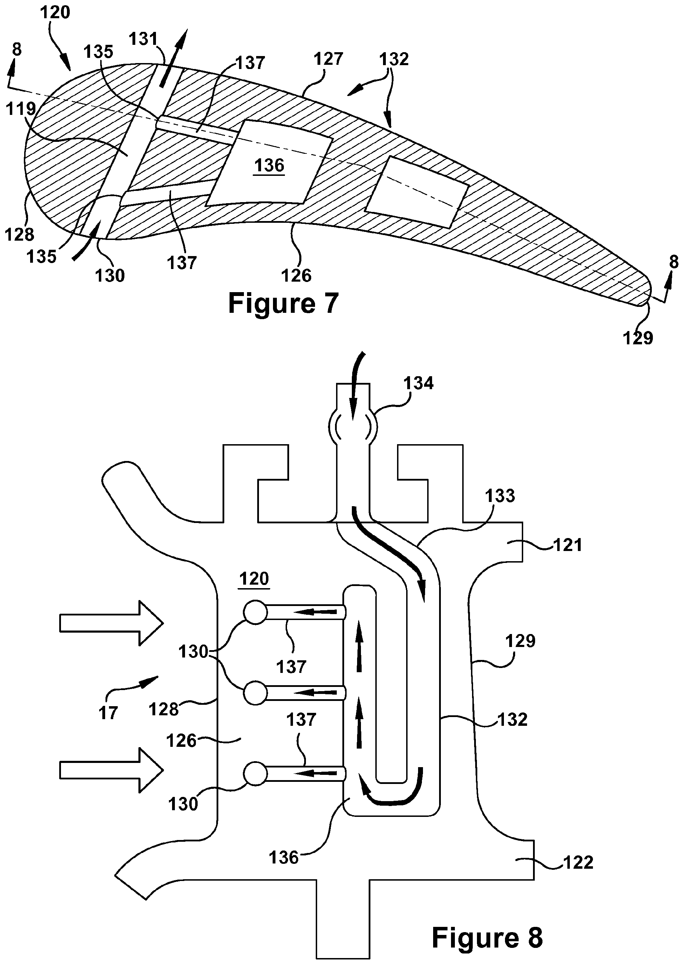

Figure 5 illustrates a view of a combustor 13 having a staged injection system 50 that enables aftward or downstream injection of fuel and/or air into the combustion zone 29. It will be appreciated that such fuel and air injection systems are commonly referred to as supplemental injection systems, late-lean injection systems, axially staged injection systems, and the like. As used herein, aspects of these types of fuel and air injectors, injection systems, and/or the components associated therewith will be referred to generally, without limitation, as "staged injection systems." The staged injection system 50 of Figure 5 is consistent with an exemplary conventional design and is provided merely to introduce concepts related to staged fuel/air injection in turbine combustion systems. As will be appreciated, these concepts are applicable in explaining and understanding the operation of the invention of the present invention as set forth in Figures 7 through 15. As will be understood, staged injection systems have been developed for the combustors of gas turbines for a number of reasons, including for the reduction of emissions. In operation, as will be appreciated, such staged injection systems typically introduce a portion of the combustor total air and fuel supply downstream of what is typically the primary injection point at the forward end of the combustor. It will be appreciated that such downstream positioning of the injectors decreases the time the combustion reactants remain at the higher temperatures of the flame zone within the combustor, which reduces the formation of. This, for example, has allowed advanced combustor designs that couple fuel/air mixing or pre-mixing technologies with the reduced reactant residence times of downstream injection to achieve further increases in combustor firing temperature and, importantly, more efficient engines, while also maintaining acceptable NOx emission levels. As will be appreciated, there are other considerations limiting the manner in which and the extent to which downstream injection may be done. For example, downstream injection may cause emission levels of CO and UHC to rise. That is, if fuel is injected in too large of quantities at locations that are too far downstream in the combustion zone, it may result in the incomplete combustion of the fuel or insufficient burnout of CO. Further, combustion occurring without sufficient premixing of fuel and air may result in very high temperature zones, which, if these zones are adjacent to certain hot gas path components, failure and/or hastened degradation will result. Thus, premixing may reduce both emissions and temperature. In sum, while the basic principles around the notion of late injection and how it may be used to affect certain emissions may be known generally, design obstacles remain as how this strategy may be best employed so to enable more efficient engines.

In one exemplary configuration, as shown in Figure 5, the staged injection system 50 may include a forward injector 21 as well as one or more staged injectors 51. As used herein, staged injectors 51 are injectors axially spaced aftward or downstream from the forward injector 21. According to an exemplary arrangement, each of the staged injectors 51 may include a fuel passageway 52 that connects to a nozzle 53. Within the nozzle 53, a fuel/air mixture is created for injection into the downstream portions of the combustion zone 29. As illustrated, the fuel passageway 52 may be contained within the outer radial wall 25 of the combustor 13, though other apparatus and methods for fuel delivery are also possible. The fuel passageway 52 may extend in a general aftward direction between a connection to a fuel source occurring near the headend 19 and a connection with the nozzles 53 of the staged injectors 51. Though other configurations are also possible for the staged injectors 51 of such systems 50, in the example provided, multiple ones of the staged injectors 51 may be positioned about the periphery of the combustion zone 29. Each of the staged injectors 51 may include a nozzle 53. According to the example provided, the nozzle 53 may be configured as a tube that extends across or intersects the flow annulus 26. This tube may be configured to direct the flow therethrough for injection into the combustion zone 29. More specifically, the outboard end of the tube of the nozzle 53 may open to the compressor discharge cavity and/or ports formed that fluidly communicate with the flow annulus 26, and thereby the tube of the nozzle 53 may accept a flow of pressurized air. As discussed more below, the nozzle 53 may further include fuel ports formed through the sides of the tube structure, which may inject fuel into the pressurized air moving through it. In this manner, each of the staged injectors 51 may function to bring together and mix a supply of air and fuel and then inject the resulting mixture into the combustion zone.

As shown in the example provided in Figure 5, the staged injection system 50 may include several of the staged injectors 51 spaced circumferentially about the aftward chamber 29 of the combustor 13. These injectors 51 may be integrated into the liner 32/liner sleeve 32 assembly (or, more generally, the inner radial wall 24/outer radial wall 25 assembly). The staged injectors 51 may be arrayed so that a fuel/air mixture is injected at multiple circumferentially spaced points about the combustion zone. As illustrated, the staged injectors 51 may be positioned at the same or common axial position. That is to say, a plurality of the staged injectors 51 may be located about the approximate same axial position along a longitudinal or central axis 57 of the combustor 13. Having this configuration, the staged injectors 51 may be described as being positioned on a common plane, or, as it will be referred to herein, an injection reference plane 58 as indicated in Figure 5.

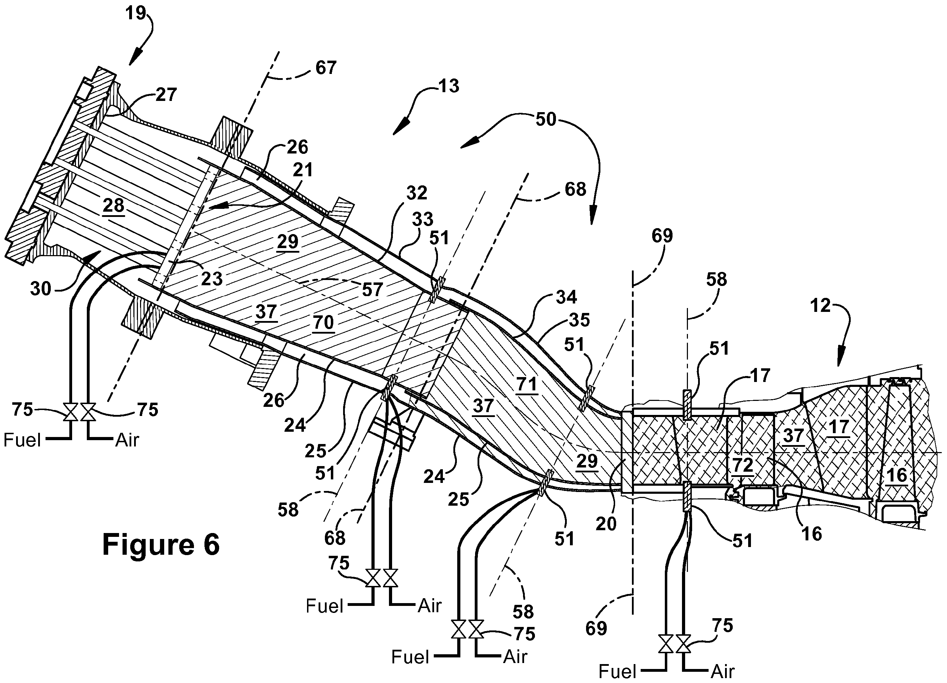

With reference now to Figure 6, a cross-sectional view of a combustor 13 and the forward stages of a turbine 12 is provided, and, with reference to the areas delineated therewithin, Figure 6 may be used to define positioning terminology within the combustor 13 and turbine 12 sections of the gas turbine 10 in relation to aspects of staged injection systems and combustor operation. Initially, in order to define axial positioning within the combustor 13, it will be appreciated that the combustor 13 and turbine 12 define a working fluid flowpath 37 that extends about a longitudinal central axis 57 from an upstream end defined by the forward injector 21 in the combustor 13 through a downstream end in the turbine 12. Accordingly, the positioning of the staged injectors 51 and other components may be defined in terms of location along this central axis 57 of the working fluid flowpath 37.

As indicated, certain perpendicular reference planes are defined in Figure 4 so to provide clarity regarding axial positioning within the working fluid flowpath 37. As illustrated, the first of these is a forward reference plane 67 that is defined near the headend 19 of the combustor 13. Specifically, the forward reference plane is disposed at the forward end of the combustion zone 29, i.e., at the boundary between the forward chamber 28 and the aftward chamber 29 defined within the inner wall 24. Another way to describe the positioning of the forward reference plane 67 is that it is approximately located at the downstream end of the nozzle 23 of the forward injector 21 or, alternatively, at the forward end of the working fluid flowpath 37. A second of the reference planes is a mid reference plane 68. The mid reference plane 68 is positioned at the approximate axial midpoint of the aftward chamber 29 of the combustor 13, i.e., about halfway between the nozzle 23 of the forward injector and the downstream end of the combustor 13, which may be the aft frame 20. In cases where the combustor 13 includes the previously described liner 32/transition piece 34 assembly, it will be appreciated that the combustor mid-plane 68 may occur near the location at which these assemblies connect. A final one of these reference planes is an aftward reference plane 69, which, as illustrated, may be defined at the aftward end of the combustor 13. As will be appreciated, the aftward reference plane 69 marks the far, downstream end of the combustor 13, and, accordingly, as in the example provided, may be defined at the aft frame 20. Additionally, according to these reference planes 67, 68, 69, specific zones within the flowpath of the combustor 13 and the turbine 12 may be designated, which are also indicated on Figure 4. Accordingly, an upstream combustion zone 70, as indicated, is shown occurring between the forward reference plane 67 and the mid reference plane 68. Second, a downstream combustion zone 71 is shown occurring between the mid reference plane 68 and the aftward reference plane 69. Finally, a turbine combustion zone 72 is the region designated as occurring from the end reference plane 69 through the first stages of blades 16, 17 within the turbine 12. As will be seen, each of these zones 70, 71, 72 is delineated from the other on Figure 5 by unique crosshatch patterns.

For exemplary purposes, Figure 6 further illustrates possible locations of a stage of the staged injectors 51 within each of the zones 70, 71, 72 described above. As will be appreciated, for the sake of clarity, the staged injectors 51 have been graphically simplified compared to the exemplary one shown in Figure 5. It should be understood that each of these stages of the staged injectors 51 may be used alone or in concert with one or both of the other stages. As illustrated, a first stage of the staged injectors 51 is shown circumferentially spaced about an injection reference plane 58 positioned within the upstream combustion zone 70. A second stage of the staged injectors 51 is shown circumferentially spaced about a second injection reference plane 58 located within the downstream combustion zone 71. And, finally, a third stage of staged injectors 51 is shown circumferentially spaced about a third injection reference plane 58 within the turbine combustion zone 72. Accordingly, one or more stages of staged injectors 51 may be provided downstream of the forward injector 21.

The staged injectors 51 at any of the aforementioned locations may be conventionally configured for the injecting air, fuel, or both air and fuel, and a plurality may be provided at each axial location such that an array of injectors about an injection reference plane 58 is created. Though graphically simplified in Figure 5, it should be understood that staged injectors 51 may include any type of conventional injector that would be appropriate for the functions described herein. As will be appreciated, according to certain aspects of the present invention, fuel and air may be controllably supplied to the forward injector 21 and each of the staged injectors 51 via any conventional way, including any of those mentioned and described in the patents and patent application incorporated by reference above, as well as U.S. Patent Application 2010/0170219, which is hereby incorporated by reference in its entirety. As schematically illustrated in Figure 4 with regard to one of the staged injectors 51 within each stage in the defined zones 70, 71, 72, as well as to the forward injector 21, the staged injection system 50 may include control apparatus and related components for actively or passively controlling the delivery of fuel and/or air to each. That is, aspects of the present invention may include control apparatus, methods, systems and configurations for distributing or metering the overall fuel and air supply delivered to the combustor 13 between the staged injectors 51 and/or the forward injector 21. The forward injector 21 and the various staged injectors 51 that may be included in the staged injection system 50 may be controlled and configured in several ways so that desired operation and preferable air and fuel splitting are achieved. As represented schematically in Figure 5, this may include actively controlling the air and fuel supplies delivered to each via a controllable valve 75, though any mechanically actuated device that functions to meter the relevant flows may also be used. It will be appreciated that active control may be achieved via connecting the controllable valves 75 to a computerized control system in which a controller electronically communicates to each valve and thereby manipulates valve settings pursuant to a control algorithm. According to other possible embodiments, the air and fuel supply to each of the staged injectors 51 as well as to the forward injector 21 may be passively controlled via relative orifice sizing of the fuel and air conduits that supply fuel and air to each. Control strategies related to the staged injection system 50 may include metering fuel and air supplies between the various staged injectors 51, the various stages (if present) of staged injectors 53, the various staged injectors 51 and the forward injector 21, or each and all.

In accordance with an embodiment of the present invention, Figure 7 provides a sectional side view of a stator blade 17 having an integrated fuel injector in which a transverse fuel nozzle ("transverse nozzle") 119 releases fuel into a flow of working fluid passing through the stator blade 17. Figure 8 is a sectional view of the stator blade of Figure 7 taken along perspective line 8-8. As will be appreciated, according to an exemplary use, the injector assembly of Figures 7 and 8 (i.e., the integrated stator blade/fuel injector) may be operated as a staged injector in a staged injection system consistent with the above described principles. Additionally, the fuel injector may be integrated into any of the rows of stator blades within the turbine 12. According to a preferred embodiment, the fuel injector is integrated into the forward-most row of stator blades 17 in the turbine 12, i.e., the row first encountered by the working fluid upon entering the turbine 12. Further, the fuel injector may be integrated into each stator blade 17 within a specific row or a portion thereof. For example, according to alternative embodiments, the fuel injector is included in half of the stator blades 17 within a particular row. As will be appreciated, the placement of the fuel injectors within a row may be regular such that the injectors are regularly spaced about the annularly shaped working fluid flowpath through the turbine 12. Further, unless otherwise stated, it should be understood that the stator blade/fuel injector assembly of Figures 7 and 8, as well as those presented below, may be formed via conventional processes, such as a one-piece casting process or some combination of casting and post-cast processes, like machining, drilling, brazing, welding, as well as additive manufacturing processes. Finally, the transverse tubes 119 may be made of any conventional materials, as well as other that are appropriate for the functionality described herein. These may include conventional metals as well as CMC or other ceramic materials.

As illustrated, the stator blade 17 generally may include an airfoil 120 that is flanked to each side by an outboard sidewall 121 and an inboard sidewall 122. As will be appreciated, the outboard sidewall 121 and inboard sidewall 120 may be formed as integral components to the airfoil 120, though other configurations are also possible. Configured in this way, the outboard sidewall 121 may define an axial section of the outboard boundary of the working fluid flowpath 37 through the turbine 13, while the inboard sidewall 122 may form the inboard boundary of the flowpath 37. As will be appreciated, the outboard sidewall 121 may rigidly attach to stationary structure positioned formed about the working fluid flowpath 37 such that the airfoil 120 is desirably placed within the working fluid flowpath 37. The inboard sidewall 122 may include structure that is positioned relative to rotating structure such that a relatively small clearance or gap remains therebetween, which prevents leakage of combustion gases during operation.

Though other configurations are possible, the airfoil 120 may include a generally concave pressure side face 126 and, circumferentially or laterally opposite that, a generally convex suction side face 127. As indicated, the pressure side face 126 and the suction side face 127 may extend axially between opposite leading 128 and trailing edges 129. In operation, the airfoil 120 may be positioned so to interact with the flow of working fluid through the turbine 12. During normal operation, the airfoil 120 of the stator blade 17 redirects the flow of working fluid so that the working fluid strikes a following row of rotor blades 16 in an efficient manner. As will be understood, this results in a pressure differential between the sides of the airfoil 120 of the stator blade 17, with the pressure on the pressure side face 126 being higher than that on the suction side face 127. As also indicated, the stator blade 17 may include several interior cooling passages or channels through which a fluid coolant is circulated in order to convectively cool the component during operation. As discussed below, these cooling passages may include one or more fuel channels 132 and one or more air channels 142, each of which may connect to one of the transverse nozzles 119. As will be appreciated, either of the cooling channels may be positioned and used to cool the transverse nozzles 119 so to prevent excessive temperatures therewithin and/or burnout of the nozzle from occurring.

As illustrated, the transverse nozzle 119 may extend through the airfoil 120 from an inlet 130 formed at or near or through the airfoil's pressure side face 126 and an outlet 131 formed at or near or through the airfoil's suction side face 127. According to an exemplary embodiment, the transverse nozzle 119 is configured as a tube having a circular cross-sectional shape. Other cross-sectional shapes-such as oval or rectangular, as well as ones having a varying shape and area, are also possible. The transverse nozzle 119 may extends linearly between the inlet 130 and the outlet 131. The transverse nozzle 119 also may define a curved path between the inlet 130 and the outlet 131. As illustrated, the inlet 130 and the outlet 131 of the transverse nozzle 119 is exposed to (i.e., in fluid communication with) the working fluid flowpath 37 through the turbine 12. As will be understood, the airfoils 120 of the stator blades 17 may be positioned within the working fluid flowpath 37 and configured to interact with the working fluid flowing therethrough. During operation, given the configuration and orientation of the airfoils 120, the pressure differential that exists between the working fluid at the pressure side face 126 and the suction side face 127 may drive the working fluid across the transverse nozzle 119, i.e., from the inlet 130 to the outlet 131. According to other possible embodiments, transverse nozzles may be included that do not have both an inlet 130 and outlet 131. In such cases, the nozzle may be supplied fuel and/or air solely from internal sources, i.e., fuel channel 132 and air channel 142, for injecting same through a single outlet port formed on the surface of the airfoil.

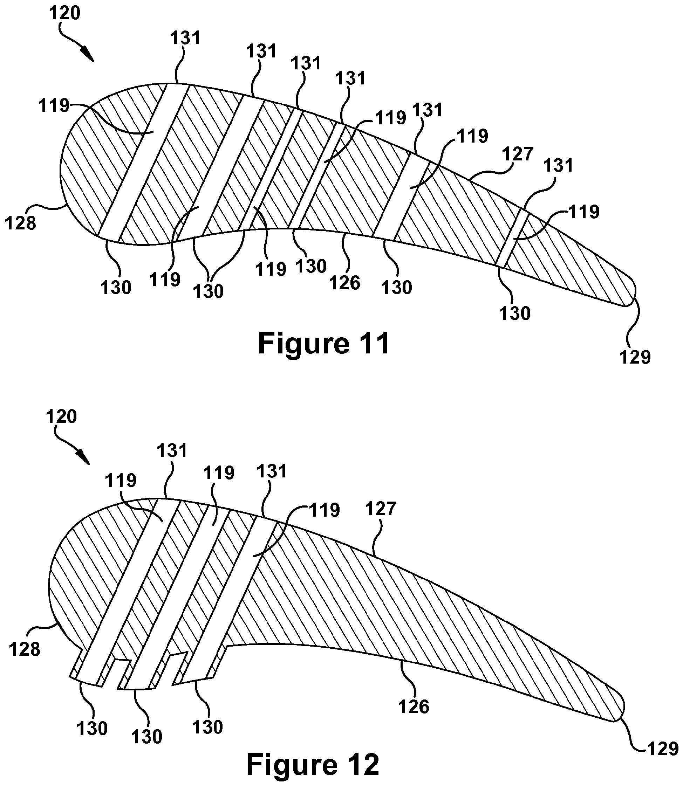

As illustrated more clearly in Figures 11 through 15, the inlet 130 of the transverse nozzle 119 may be formed through the pressure side face 126 of the airfoil 120. The configuration of the inlet 130 relative to the pressure side face 126 may vary. According to certain preferred embodiments, the inlet 130 is flush relative the pressure side face 126. The outlet 131 of the transverse nozzle 119 may be formed through the suction side face 127 of the airfoil 120 and, likewise, may have a configuration that varies. According to certain preferred embodiments, the outlet 131 may be flush relative the suction side face 127. According to other embodiments, as discussed more below, the inlet 130 and the outlet 131 of the transverse nozzle 119 may include a protruding tube that extends from the pressure side face 126 and/or the suction side face 127, respectfully. For example, the protruding tube configuration may be used to push the resulting combustion from the nozzle 119 away from the downstream surface of the airfoil. This will prevent combustion from occurring directly adjacent the airfoil and thereby reduce the chance that it is harmed via localized combustion hotspots and excessive temperatures.

The transverse nozzle 119 may connect to a fuel channel 132 that is formed through interior of the stator blade 17. As illustrated, at an upstream end, the fuel channel 132 may include a fuel supply channel 133 that is formed through the outboard sidewall 121 of the stator blade 17. The fuel supply channel 133 may fluidly communicate with a fuel source 134. At a downstream end, the fuel channel 132 may include one or more outlet ports 135 through which the fuel in the fuel channel 132 may be released into the transverse nozzle 119. According to preferred embodiments, several of the outlet ports 135 may be spaced along the length of the transverse nozzle 119. The outlet ports 135 may be angled relative to the flow direction through the transverse nozzle 119 so to reduce the risk of flame holding during operation. As will be appreciated, the fuel passing through the fuel channel 132 may have a cooling effect on the stator blade 17 during operation. The fuel channel 132, thus, may be configured to have a winding path so to address the cooling requirements of particular areas of the blade. Thus, as illustrated, the fuel channel 132 may be configured to extend through particular regions of the airfoil 120. Specifically, the fuel channel 132, as illustrated, may include at least one segment having a serpentine or "switchback" profile. In this manner, the coverage of the cooling effect of the fuel within the airfoil 120 may be enhanced.

According to preferred embodiments, the fuel channel 132 may have an upstream end, which, as stated, may include the fuel supply channel 133, and a downstream end, which may include one or more outlet ports 135 that fluidly connect the fuel channel 132 to the transverse nozzle 119. The outlet ports 135 may be desirably spaced or group between the inlet 130 and the outlet 131 of the transverse nozzle 119 pursuant to desired performance characteristics. As illustrated, the fuel channel 132 further may include a fuel manifold 136. The fuel manifold 136 may be configured as a supply feed for several smaller fuel passageways. According to certain preferred embodiments, the fuel manifold 136 may supply several connecting channels 137 that extend from the fuel manifold 136. As illustrated, each of the connecting channels 137 may connect the fuel manifold 136 to an outlet port 135 in the transverse nozzle 119. According to an alternative embodiment, the fuel manifold 136 may include a catalyst.

The stator blade 17 may include several of the transverse nozzles 119. The transverse nozzles 119 may be desirably spaced on the airfoil 120 according to preferred performance criteria. As illustrated, the transverse nozzles 119 may be regular spaced as a column over the radial height of the airfoil 120 (i.e., the distance between the inboard sidewall 122 and the outboard sidewall 121). As illustrated in Figures 11 through 15, the transverse nozzles 119 may further be spaced between the leading edge 128 and the trailing edge 129 of the airfoil 120.

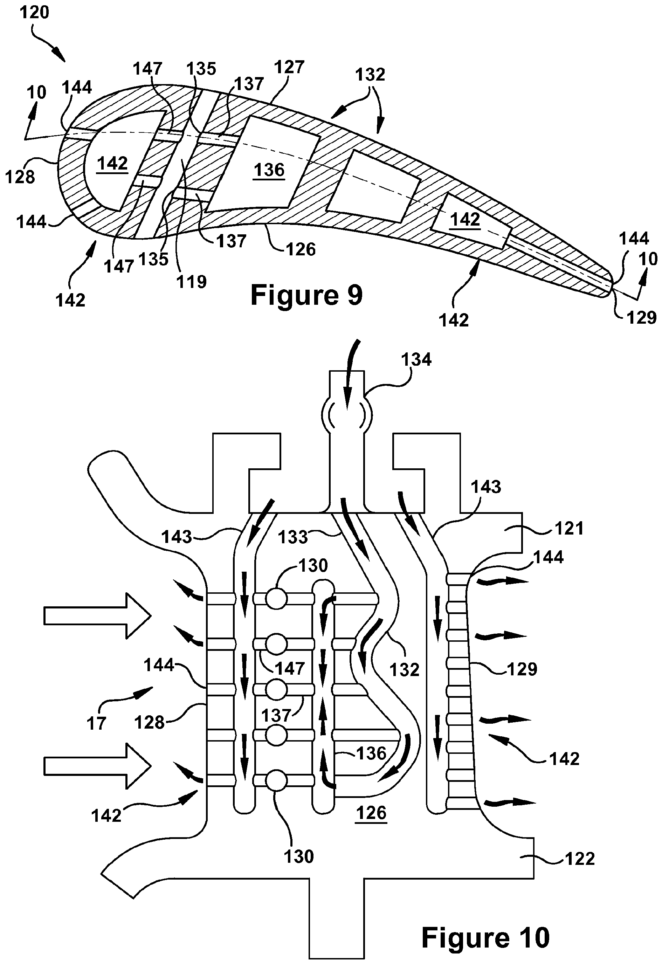

In accordance with an alternative embodiment of the present invention, Figure 9 provides a sectional side view of a stator blade 17 having a transverse nozzle 119 that also receives a supply of air via an air channel 142. As will be appreciated, Figure 10 is a sectional view of the stator blade of Figure 9 taken along perspective line 10-10. As shown, the stator blade 17 of the present example may include a fuel channel 132 and transverse nozzles 119, which may be configured pursuant to the principles provided above. The stator blade 17 may further include a plurality of air channels 142. As will be understood, such air channels 142 may be used to circulate compressed air through the airfoil 120 of the stator blade 17 in order to convectively cool it during operation. In such cases, the supply of compressed air may be bled from the compressor 11 and directed to the air channels 142 via air supply channels 143, which, like the fuel supply channels 133, may be formed through the outboard sidewall 121 of the stator blade 17. As will be appreciated, the air supply channels 143 may fluidly communicate either directly or indirection with the compressor discharge cavity 44.

The downstream sections of the air channels 142 may include one or more surface outlet ports 144 through which air is released into the working fluid flowpath 37 after being circulated through the interior of the airfoil 120. As will be appreciated, the surface outlet ports 144 may be configured and positioned to promote film cooling by the released air over targeted areas of the outer surface of airfoil 120. Such outlet ports 144 may be located on any surface of the airfoil. As also illustrated, the downstream sections of the air channels 142 may include connecting channels 147 that deliver a supply of air to the transverse nozzles 119. As such, the air channel 142 of the present invention may include an upstream section, at which the air supply channel 143 fluidly connects the air channel 142 to supply source, and downstream sections that may include: surface outlet ports 144 for the release of air; and/or connecting channels 147 that carry air for injection into to the transverse nozzle 119. According to preferred embodiments, such connecting channels 147 branch from larger sections of the air channel 142. The connecting channels 147 then extend toward and connect to laterally formed ports within the transverse nozzle 119. Pursuant to desired performance, such outlet ports may be spaced between the inlet 130 and the outlet 131 of the transverse nozzle 119 or may be grouped according to desired performance criteria.

As illustrated, according to exemplary embodiments, the air channels 142 may be configured to have a winding path so to actively cool particular regions of the airfoil 120. Specifically, the air channels 142, as illustrated, may include at least one segment having a serpentine or "switchback" profile that is configured to enhance cooling coverage. As further illustrated, the air channels 142 may include a plurality of separated circuits, which, for example, may include an air channel 142 positioned near the leading edge 128 of the airfoil 120 and another positioned near trailing edge 129 of the airfoil 120. Thus, according to the exemplary embodiment that is illustrated, the air channels 142 may flank a centrally located fuel channel 132. These air channels 142 may include several surface outlet ports 144 that are located near the leading edge 128 and trailing edge 129 of the airfoil 120. As shown, the air channel 142 positioned near the leading edge 128 of the airfoil 120 may include the several connecting channels 147 that feed air to the traverse nozzle 119.

Turning now to Figures 11 through 15, several cross-sectional views are provided that show alternate configurations of the transverse nozzles 119. As will be appreciated, these figures are simplified for showing alternative arrangements for the transverse nozzle 119 aspect of the present invention. Unless otherwise specified, these alternative arrangements may be used in conjunction with any of the other features and aspects of the systems already discussed herein, including those related to air channel and fuel channel configurations, as would be understood by someone of ordinary skill in the relevant technical arts.

As already mentioned, the stator blade 17 may include several of the transverse nozzles 119 extending across the airfoil 120. As shown in Figures 7 and 9, the transverse nozzles 119 may be radially spaced along the airfoil 120 between the inboard and outboard boundary of the working fluid flowpath 37. As shown in Figures 11 through 15, the transverse nozzles 119 may be spaced between the leading edge 128 and the trailing edge 129 of the airfoil 120. As shown, this spacing may include regular and irregular intervals between transverse nozzles 119. As illustrated in Figures 12 through 15, according to certain embodiments, the transverse nozzles 119 may be grouped toward the leading edge 128 of the airfoil 120.

As further illustrated, the configuration of the inlet 130 and outlet 131 of the transverse nozzle 119 may vary. As provided in Figure 11, the inlet 130 of the transverse nozzle 119 may be formed through the pressure side face 126 of the airfoil 120 such that it is flush relative the pressure side face 126 of the airfoil 120. The outlet 130 may be similarly configured, i.e., the outlet 130 may be formed through the pressure side face 126 of the airfoil 120 such that it is flush relative the pressure side face 126.

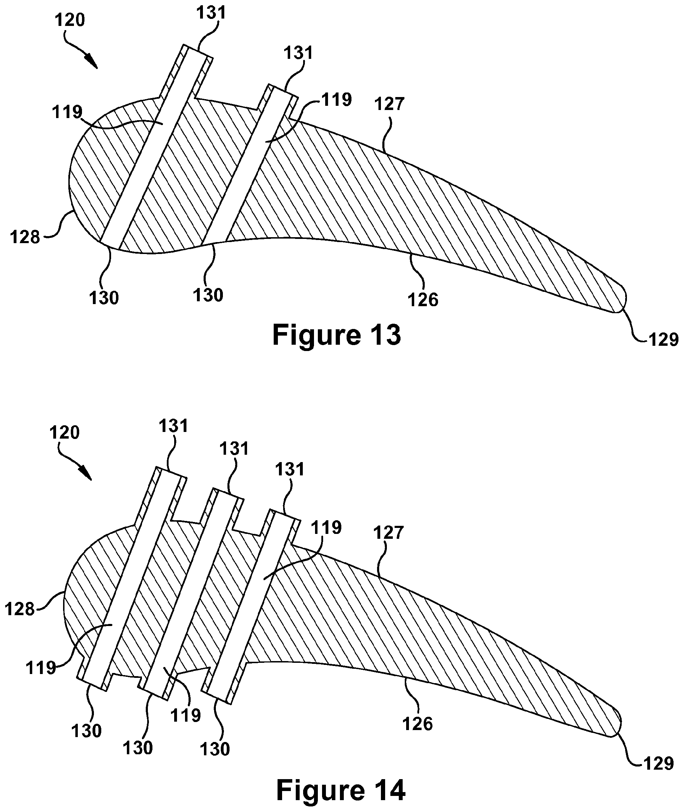

According to another embodiment, as illustrated in Figure 12, the inlet 130 of the transverse nozzle 119 may include a protruding tube that extends from the pressure side face 126 of the airfoil 120, while the outlet 131 is flush relative the suction side face 127 of the airfoil 120. In such cases, the protruding tube of the inlet 130 may include solid lateral walls that define an opening that is offset from the pressure side face 126 of the airfoil 120. According to an alternative embodiment, as illustrated in Figure 13, the outlet 131 of the transverse nozzle 119 may include the protruding tube, which, in this case, extends from the suction side face 127 of the airfoil 120. As shown, the inlet 130 may be configured flush relative the pressure side face 126 of the airfoil 120. The protruding tube of the outlet 131 may include solid lateral walls that define an opening that is offset from the suction side face 127 of the airfoil 120. In other cases, as illustrated in Figure 14, both the inlet 130 and the outlet 131 of the transverse nozzle 119 may include the protruding tube configuration. Each of protruding tubes may include solid lateral walls that define an opening that is offset from the surface of the airfoil 120.

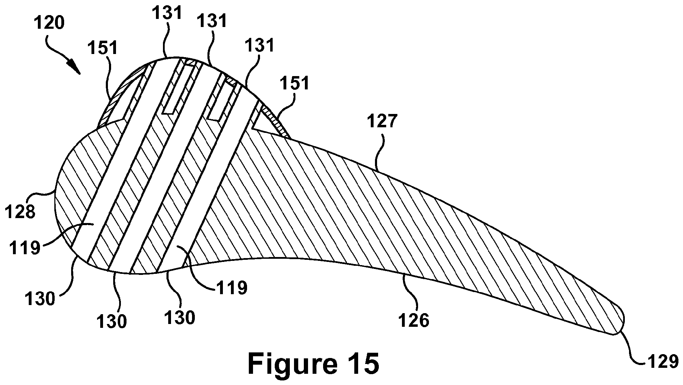

As shown in Figure 15, a flaring wall 151 may be formed around the protruding tubes of the inlets 130 and outlets 131 to improve aerodynamic performance. In the example provided, the fuel injector may include several transverse nozzles 119 that have outlets 131 having the protruding tube configuration. As illustrated, according to an alternative embodiment, the flaring wall 151 may be constructed about the protruding tubes of the outlets 131 of the transverse nozzles 119. In such cases, the flaring wall 151 may be configured to provide a smooth transition between the surface of the suction side face 127 and the openings of the protruding tubes that are offset from the suction side face 127. As will be appreciated, the flaring wall 151 may improve aerodynamic performance of the airfoil 120 in regions having protruding tubes.

As provided herein, a system is described for utilizing turbine stator blades as an efficient way to inject fuel and air for reheat or staged combustion. As will be appreciated, prior attempts at this resulted in injected fuel/air being not well mixed, which caused higher NOx and CO emission levels and non-uniform temperature distribution within the turbine that resulted in component failures. With the system and components of the present application, the pressure drop across the stator blades is efficiently utilized to drive working fluid through multiple transverse nozzles formed through the airfoil of the stator blades. The fuel and air outlet ports provided within the transverse nozzles may be arranged to allow a high degree of premixing before the mixture is injected into the working fluid flowpath for ignition. Additionally, the present system enables use as coolant for the fuel being delivered by to the transverse nozzle. As will be appreciated, such staged injection of well mixed fuel and air may be used to reduce peak combustion temperatures and thereby lower NOx emission levels. Additionally, the injection by the transverse nozzles through the suction side face of airfoil maintains combustion products away from cool surfaces, which may enable CO burnout. Cooling air also may optionally be delivered to the transverse nozzles, either directly into the transverse nozzles or by other downstream means, to improve the combustion characteristics of the injected fuel. Combustion characteristics may be further improved via catalysts installed within the system's fuel channels, such as in the fuel manifold, which promote light off and/or partially reform the fuel to reduce the required residence time for combustion. In this manner, as will be appreciated, efficient reheat or staged injection may achieved via integration of transverse nozzles within the airfoils of stator blades.

As one of ordinary skill in the art will appreciate, the many varying features and configurations described above in relation to the several exemplary embodiments may be further selectively applied to form the other possible embodiments of the present invention. For the sake of brevity and taking into account the abilities of one of ordinary skill in the art, all of the possible iterations is not provided or discussed in detail, though all combinations and possible embodiments embraced by the several claims below or otherwise are intended to be part of the instant application. In addition, from the above description of several exemplary embodiments of the invention, those skilled in the art will perceive improvements, changes and modifications. Such improvements, changes and modifications within the skill of the art are also intended to be covered by the appended claims. Further, it should be apparent that the foregoing relates only to the described embodiments of the present application and that numerous changes and modifications may be made herein without departing from the spirit and scope of the application as defined by the following claims and the equivalents thereof.

Various aspects and embodiments of the present invention are defined by the following numbered clauses:
1. A gas turbine that comprises a row of circumferentially spaced stator blades positioned in a turbine, wherein each of the stator blades within the row includes an airfoil defined between a concave pressure side face and a laterally opposed convex suction side face, wherein the pressure side face and the suction side face extend axially between opposite leading and trailing edges and radially between inboard and outboard sidewalls;
   wherein at least one of the stator blades within the row of stator blades comprises a fuel injector that includes:
   a transverse nozzle extending through the airfoil that includes an outlet formed through the suction side face of the airfoil; and
   a fuel channel formed through the airfoil of the stator blade, the fuel channel having an upstream end, at which an inlet port fluidly connects the fuel channel to a fuel supply, and a downstream end, at which an outlet port fluidly connects the fuel channel to the transverse nozzle.
2. The gas turbine according to clause 1, wherein a plurality of the stator blades in the row of stator blades comprises the fuel injector;
   wherein the row of the stator blades comprises a forward-most row of stator blades in the turbine; and
   wherein the transverse nozzle extends through the airfoil between an inlet formed through the pressure side face and the outlet formed through the suction side face of the airfoil.
3. The gas turbine according to any preceding clause, wherein the transverse nozzle comprises a tube that extends between the inlet and the outlet;
   wherein the airfoils of each of the stator blades in the row of stator blades are positioned within a working fluid flowpath through which a working fluid flows during operation of the gas turbine;
   wherein a majority of the stator blades in the row of stator blades comprises the fuel injector; and
   wherein the inlet and the outlet of the transverse nozzle fluidly communicate with the working fluid flowpath of the turbine and are positioned such that, during operation, a pressure differential between the working fluid at the pressure side face and the working fluid at the suction side face drives the working fluid across the transverse nozzle.
4. The gas turbine according to any preceding clause, wherein the airfoils of each of the stator blades in the row of stator blades are positioned within a working fluid flowpath through which a working fluid flows during operation of the gas turbine; and
   wherein the outlet of the transverse nozzle comprises a downstream position in the working fluid flowpath relative to the inlet of the transverse nozzle.
5. The gas turbine according to any preceding clause, wherein the inlet of the transverse nozzle is formed through the pressure side face of the airfoil such that the inlet is flush relative the pressure side face of the airfoil; and
   wherein the outlet of the transverse nozzle is formed through the suction side face of the airfoil such that the outlet is flush relative the suction side face of the airfoil.
6. The gas turbine according to any preceding clause, wherein the inlet of the transverse nozzle comprises a protruding tube that extends from the pressure side face of the airfoil;
   wherein the outlet of the transverse nozzle is formed through the suction side face of the airfoil such that the outlet is flush relative the suction side face of the airfoil; and
   wherein the protruding tube of the inlet comprises solid lateral walls that define an opening that is offset from the pressure side face of the airfoil.
7. The gas turbine according to any preceding clause, wherein the inlet of the transverse nozzle is formed through the pressure side face of the airfoil such that the inlet is flush relative the pressure side face of the airfoil;
   wherein the outlet of the transverse nozzle comprises a protruding tube that extends from the suction side face of the airfoil; and
   wherein the protruding tube of the outlet comprises solid lateral walls that define an opening that is offset from the suction side face of the airfoil.
8. The gas turbine according to any preceding clause, wherein the fuel injector comprises a plurality of the transverse nozzles, each of which have the outlet that comprises the protruding tube;
   further comprises a flaring wall constructed about the protruding tubes of the plurality of the transverse nozzles, the flaring wall configured for smoothly transitioning between the surface of the suction side face and the openings of the protruding tubes that are offset therefrom.
9. The gas turbine according to any preceding clause, wherein the inlet of the transverse nozzle comprises a protruding tube that extends from the pressure side face of the airfoil, the protruding tube of the inlet comprising solid lateral walls that define an opening that is offset from the pressure side face of the airfoil; and
   wherein the outlet of the transverse nozzle comprises a protruding tube that extends from the suction side face of the airfoil, the protruding tube of the outlet comprising solid lateral walls that define an opening that is offset from the suction side face of the airfoil.
10. The gas turbine according to any preceding clause, wherein the inboard and outboard sidewalls of each of the stator blades in the row of stator blades are integrally formed relative to the airfoil of each, the inboard sidewall being positioned to an inboard side of the airfoil and defining an inboard boundary of the working fluid flowpath and the outboard sidewall being positioned to an outboard side of the airfoil and defining an outboard boundary of the working fluid flowpath;
   wherein the fuel channel of the fuel injector comprises an upstream end, which includes a fuel supply channel that fluidly connects the fuel channel to a fuel source, and a downstream end, which includes an outlet port that fluidly connects the fuel channel to the transverse nozzle; and
   wherein the fuel supply channel extends through the outboard sidewall.
11. The gas turbine according to any preceding clause, wherein the fuel channel of the fuel injector comprises an upstream end, which includes a fuel supply channel that fluidly connects the fuel channel to a fuel source, and a downstream end, which includes an outlet port that fluidly connects the fuel channel to the transverse nozzle.
12. The gas turbine according to any preceding clause, wherein the downstream end of the fuel channel comprises a plurality of outlet ports spaced between the inlet and the outlet of the transverse nozzle; and
   wherein fuel channel comprises a fuel manifold from which connecting channels extend so to connect the fuel manifold to each of the plurality of outlet ports.
13. The gas turbine according to any preceding clause, wherein the fuel channel comprise a section having a serpentine profile for enlarging coverage of a cooling effect within the airfoil of a fuel circulating therethrough.
14. The gas turbine according to any preceding clause, wherein the fuel injector includes a plurality of the transverse nozzles; and
   wherein the plurality of the transverse nozzles is spaced along a radial height of the airfoil defined between the inboard sidewall and the outboard sidewall.
15. The gas turbine according to any preceding clause, wherein the fuel injector includes a plurality of the transverse nozzles; and
   wherein the plurality of the transverse nozzles are spaced between the leading edge and the trailing edge of the airfoil.
16. The gas turbine according to any preceding clause, wherein the plurality of stator blades within the row of stator blades that comprises the fuel injector further includes an air channel through which air is circulated through an interior of the airfoil;
   wherein the air channel comprises an upstream end, at which an air supply channel fluidly connects the air channel to an air source, and a downstream end; and
   wherein the downstream end of the air channel comprises surface outlet ports from which air is released into the working fluid flowpath.
17. The gas turbine according to any preceding clause, wherein the plurality of stator blades within the row of stator blades that comprises the fuel injector further includes an air channel through which air is circulated through an interior of the airfoil;
   wherein the air channel comprises an upstream end, which includes an air supply channel that connects the air channel to an air source, and a downstream end; and
   wherein the downstream end of the air channel comprises connecting channels that connect the air channel to the transverse nozzle.
18. The gas turbine according to any preceding clause, wherein the air supply channel extends through the outboard sidewall of the stator blade;
   wherein the connecting channels of the air channel comprise outlet ports spaced between the inlet and the outlet of the transvers nozzle; and
   wherein the air channel comprises a segment having a serpentine configuration.
19. A stator blade for a turbine of a gas turbine, the stator blade being configured for use within a row of circumferentially spaced stator blades, the stator blade further including:
   an airfoil defined between a concave pressure side face and a laterally opposed convex suction side face, wherein the pressure side face and the suction side face extend axially between opposite leading and trailing edges and radially between inboard and outboard sidewalls; and
   a fuel injector that comprises:
      a transverse nozzle extending through the airfoil between an inlet formed through the pressure side face and an outlet formed through the suction side face of the airfoil; and
      a fuel channel formed through the airfoil of the stator blade, the fuel channel having an upstream end, at which an inlet port fluidly connects the fuel channel to a fuel supply, and a downstream end, at which an outlet port fluidly connects the fuel channel to the transverse nozzle.
20. A gas turbine comprising:
   a combustor coupled to a turbine that together define a working fluid flowpath, the working fluid flowpath extending aftward along a longitudinal axis from a forward end defined by a forward injector in the combustor, through an interface at which the combustor ends and the turbine begins, and then through the turbine to an aftward end;
   a compressor discharge cavity formed about the working fluid flowpath for receiving a combustor air supply delivered thereto by a compressor;
   circumferentially spaced stator blades positioned so to form a row of stator blades in the turbine, each of the stator blades comprising an airfoil extending across the working fluid flowpath, the airfoil defined between a concave pressure side face and a laterally opposed convex suction side face, wherein the pressure side face and the suction side face extend axially between opposite leading and trailing edges and radially between inboard and outboard sidewalls; and
   a staged injection system that includes the forward injector and a staged injector that includes a fuel injector integrated into at least half of the stator blades of the row of stator blades;
   wherein the fuel injector comprises:
      a transverse nozzle extending through the airfoil between an inlet formed through the pressure side face and an outlet formed through the suction side face of the airfoil; and
      a fuel channel formed through the airfoil of the stator blade, the fuel channel having an upstream end, at which an inlet port fluidly connects the fuel channel to a fuel supply, and a downstream end, at which an outlet port fluidly connects the fuel channel to the transverse nozzle.

## Claims

1. A gas turbine that comprises a row of circumferentially spaced stator blades positioned in a turbine, wherein each of the stator blades within the row includes an airfoil defined between a concave pressure side face and a laterally opposed convex suction side face, wherein the pressure side face and the suction side face extend axially between opposite leading and trailing edges and radially between inboard and outboard sidewalls;
wherein at least one of the stator blades within the row of stator blades comprises a fuel injector that includes:
a transverse nozzle extending through the airfoil that includes an outlet formed through the suction side face of the airfoil; and
a fuel channel formed through the airfoil of the stator blade, the fuel channel having an upstream end, at which an inlet port fluidly connects the fuel channel to a fuel supply, and a downstream end, at which an outlet port fluidly connects the fuel channel to the transverse nozzle.

2. The gas turbine according to claim 1, wherein a plurality of the stator blades in the row of stator blades comprises the fuel injector;
wherein the row of the stator blades comprises a forward-most row of stator blades in the turbine; and
wherein the transverse nozzle extends through the airfoil between an inlet formed through the pressure side face and the outlet formed through the suction side face of the airfoil.

3. The gas turbine according to claim 2, wherein the transverse nozzle comprises a tube that extends between the inlet and the outlet;
wherein the airfoils of each of the stator blades in the row of stator blades are positioned within a working fluid flowpath through which a working fluid flows during operation of the gas turbine;
wherein a majority of the stator blades in the row of stator blades comprises the fuel injector; and
wherein the inlet and the outlet of the transverse nozzle fluidly communicate with the working fluid flowpath of the turbine and are positioned such that, during operation, a pressure differential between the working fluid at the pressure side face and the working fluid at the suction side face drives the working fluid across the transverse nozzle.

4. The gas turbine according to claim 2 or 3, wherein the airfoils of each of the stator blades in the row of stator blades are positioned within a working fluid flowpath through which a working fluid flows during operation of the gas turbine; and
wherein the outlet of the transverse nozzle comprises a downstream position in the working fluid flowpath relative to the inlet of the transverse nozzle.

5. The gas turbine according to claim 4, wherein the inlet of the transverse nozzle is formed through the pressure side face of the airfoil such that the inlet is flush relative the pressure side face of the airfoil; and
wherein the outlet of the transverse nozzle is formed through the suction side face of the airfoil such that the outlet is flush relative the suction side face of the airfoil.

6. The gas turbine according to claim 4, wherein the inlet of the transverse nozzle comprises a protruding tube that extends from the pressure side face of the airfoil;
wherein the outlet of the transverse nozzle is formed through the suction side face of the airfoil such that the outlet is flush relative the suction side face of the airfoil; and
wherein the protruding tube of the inlet comprises solid lateral walls that define an opening that is offset from the pressure side face of the airfoil.

7. The gas turbine according to claim 4, wherein the inlet of the transverse nozzle is formed through the pressure side face of the airfoil such that the inlet is flush relative the pressure side face of the airfoil;
wherein the outlet of the transverse nozzle comprises a protruding tube that extends from the suction side face of the airfoil; and
wherein the protruding tube of the outlet comprises solid lateral walls that define an opening that is offset from the suction side face of the airfoil.

8. The gas turbine according to claim 4, wherein the inlet of the transverse nozzle comprises a protruding tube that extends from the pressure side face of the airfoil, the protruding tube of the inlet comprising solid lateral walls that define an opening that is offset from the pressure side face of the airfoil; and
wherein the outlet of the transverse nozzle comprises a protruding tube that extends from the suction side face of the airfoil, the protruding tube of the outlet comprising solid lateral walls that define an opening that is offset from the suction side face of the airfoil.

9. The gas turbine according to any of claims 4 to 8, wherein the inboard and outboard sidewalls of each of the stator blades in the row of stator blades are integrally formed relative to the airfoil of each, the inboard sidewall being positioned to an inboard side of the airfoil and defining an inboard boundary of the working fluid flowpath and the outboard sidewall being positioned to an outboard side of the airfoil and defining an outboard boundary of the working fluid flowpath;
wherein the fuel channel of the fuel injector comprises an upstream end, which includes a fuel supply channel that fluidly connects the fuel channel to a fuel source, and a downstream end, which includes an outlet port that fluidly connects the fuel channel to the transverse nozzle; and
wherein the fuel supply channel extends through the outboard sidewall.

10. The gas turbine according to any of claims 4 to 9, wherein the fuel channel of the fuel injector comprises an upstream end, which includes a fuel supply channel that fluidly connects the fuel channel to a fuel source, and a downstream end, which includes an outlet port that fluidly connects the fuel channel to the transverse nozzle.

11. The gas turbine according to any of claims 4 to 10, wherein the fuel injector includes a plurality of the transverse nozzles; and
wherein the plurality of the transverse nozzles is spaced along a radial height of the airfoil defined between the inboard sidewall and the outboard sidewall.

12. The gas turbine according to any of claims 4 to 10, wherein the fuel injector includes a plurality of the transverse nozzles; and
wherein the plurality of the transverse nozzles are spaced between the leading edge and the trailing edge of the airfoil.

13. The gas turbine according to any of claims 4 to 12, wherein the plurality of stator blades within the row of stator blades that comprises the fuel injector further includes an air channel through which air is circulated through an interior of the airfoil;
wherein the air channel comprises an upstream end, at which an air supply channel fluidly connects the air channel to an air source, and a downstream end; and
wherein the downstream end of the air channel comprises surface outlet ports from which air is released into the working fluid flowpath.

14. The gas turbine according to any of claims 4 to 12, wherein the plurality of stator blades within the row of stator blades that comprises the fuel injector further includes an air channel through which air is circulated through an interior of the airfoil;
wherein the air channel comprises an upstream end, which includes an air supply channel that connects the air channel to an air source, and a downstream end; and
wherein the downstream end of the air channel comprises connecting channels that connect the air channel to the transverse nozzle.

15. A stator blade for a turbine of a gas turbine, the stator blade being configured for use within a row of circumferentially spaced stator blades, the stator blade further including:
an airfoil defined between a concave pressure side face and a laterally opposed convex suction side face, wherein the pressure side face and the suction side face extend axially between opposite leading and trailing edges and radially between inboard and outboard sidewalls; and a fuel injector that comprises:
a transverse nozzle extending through the airfoil between an inlet formed through the pressure side face and an outlet formed through the suction side face of the airfoil; and
a fuel channel formed through the airfoil of the stator blade, the fuel channel having an upstream end, at which an inlet port fluidly connects the fuel channel to a fuel supply, and a downstream end, at which an outlet port fluidly connects the fuel channel to the transverse nozzle.
